# EUROPEAN PATENT APPLICATION

(11) **EP 4 262 072 A1**
(43) Date of publication of application: **18.10.2023**
(21) Application number: 22168150.5
(22) Date of filing: 13.04.2022
(51) Int. Cl.: H02M 1/08, H02M 1/44, H02M 1/14

(54) **A METHOD FOR REDUCING NOISE IN A CONVERTER ARRANGEMENT AND A CONVERTER ARRANGEMENT WITH NOISE REDUCTION**

(71) Applicant: ABB SCHWEIZ AG, 5400 Baden (CH)
(72) Inventor: Salmia, Teemu, 00380 Helsinki (FI); Kärppä, Jaani, 00380 Helsinki (FI); Peltonen, Lauri, 00380 Helsinki (FI); Vilkki, Markus, 00380 Helsinki (FI)
(74) Representative: Kolster Oy Ab

(57) **Abstract**

The invention relates to the field of converter arrangements, such as converter arrangements used in energy storage solutions and in industrial applications, and more particularly to a method for reducing noise in a converter arrangement and to a converter arrangement with noise reduction. The converter arrangement with noise reduction, said converter arrangement comprising an at least one DC/DC converter (11-15, 17-19), an at least one choke arrangement (41-45, 47-49) and an energy supply (10, 27, 28, 60. 65, 80) and/or an energy storage (20, 27, 28, 80), wherein said at least one converter (11-15, 17-19) is arranged: for determining a general switching frequency; and for generating at least two divided switching frequencies, said at least two divided switching frequencies comprising frequencies on both sides of said general switching frequency in frequency spectrum, and wherein said at least one converter (11-15, 17-19) is arranged to apply said generated at least two divided switching frequencies as switching frequencies used in said converter arrangement.

## Description

### FIELD OF THE INVENTION

The present invention relates to the field of converter arrangements, such as converter arrangements used in energy storage solutions and in industrial applications, and more particularly to a method for reducing noise in a converter arrangement and to a converter arrangement with noise reduction.

### BACKGROUND OF THE INVENTION

Converter arrangements are widely used for industrial applications, e.g., in storing electrical energy and in providing and controlling electrical power and energy to various public and industrial applications as well as for driving and controlling various public and industrial applications. Converter drives are used in industry for different applications, such as for driving motors within the transportation industry, for driving different devices within the process and manufacturing industry as well as within the energy industry. There are applications commonly used for converter drives within the transportation industry for example in metro and railway traffic applications as well as in ship propulsion unit applications of the marine industry. Within the energy industry, converter drives can be used for example as converter drives for wind turbines of the wind power industry.

Converter drives are typically used together with electric machines, such as for electric motors and electric generators. Converter drives are used together with electric generators in storing electrical energy from a generator to an electrical storage, e.g., to a battery energy storage (BES) or to a supercapacitor energy storage (SCES). Converter drives are also used together with electric motors in providing electrical energy and power from an energy storage, e.g. from a battery energy storage, to an electric motor, e.g. to a motor of a bus, to a motor of a marine vessel or to a motor of a heavy equipment machine.

Converter installations may often comprise chokes, e.g., AC chokes and/or DC chokes. Chokes are widely used in converter arrangements to filter current, i.e., to slow the rate of change of current. Chokes often make a very unpleasant sound due to magnetostrictivity. Magnetostrictivity is a property of ferromagnetic materials where the physical proportions of the materials change when exposed to an external magnetic field. The material often used in chokes, iron, is very magnetostrictive. In addition to the magnetostriction, the intensity of the sound generated in the chokes can be influenced by the flux density of the magnetic core of the choke, more specifically by the average value of the flux density and the peak value.

In prior art solutions, the noise level of the converter installation is typically reduced by reducing the flux density or its peak-to-peak value. This can be achieved either by increasing the switching frequency of the rectifier or the switch, or by increasing the physical size of the magnetic core of the choke.

There is a significant drawback with prior art solution of increasing the switching frequency as this substantially increases the semiconductor losses and leads to more expensive component choices so that it is possible to increase the switching frequency sufficiently. Increasing the magnetic heart of the choke, in turn, makes the choke heavier and more expensive.

In addition, if the sound source cannot be affected, a secondary prior art solution is to attenuate the sound, for example by using a sound insulation mat or by immersing the choke in an epoxy resin. Both solutions lead to increased weight and more expensive design.

In today's demanding environment, there is a need for a more effective and elegant solution for a method for reducing noise in a converter arrangement and a need for a solution for a converter arrangement with reduced noise level.

There is a demand in the market for a method for reducing noise in a converter arrangement and for a converter arrangement that would provide reduced noise level compared to the current prior art solutions.

### BRIEF DESCRIPTION OF THE INVENTION

The object of the invention is to introduce a method for reducing noise in a converter arrangement and a converter arrangement with noise reduction, which would provide a reduced noise level in said converter arrangement. Advantageous embodiments are furthermore presented.

It is brought forward a new method for reducing noise in a converter arrangement, said converter arrangement comprising an at least one converter, an at least one choke arrangement and energy supply and/or an energy storage, in which method: a general switching frequency for said at least one converter is determined; at least two divided switching frequencies are generated, said at least two divided switching frequencies comprising frequencies on both sides of said general switching frequency in frequency spectrum; and said generated at least two divided switching frequencies are applied by said at least one converter as switching frequencies used in said converter arrangement.

In a preferred embodiment of said method, frequency division data is defined, said frequency division data comprising parameters and/or values defining a desired frequency pattern; and said at least two divided switching frequencies are generated with the help of said defined frequency division data.

In a preferred embodiment of said method, random numbers are generated by a suitable random function for defining random elements for a desired frequency pattern; and said at least two divided switching frequencies are generated with the help of said generated random numbers.

In a preferred embodiment of said method, frequency division data is defined, said frequency division data comprising parameters and/or values defining a desired frequency pattern; random numbers are generated by a suitable random function for defining random elements for said desired frequency pattern; and said at least two divided switching frequencies are generated with the help of said defined frequency division data and said generated random numbers.

In a preferred embodiment of said method, said at least two divided switching frequencies comprise 2 to 4 switching frequencies on each side of said general switching frequency in frequency spectrum.

In a preferred embodiment of said method, said at least two divided switching frequencies comprise 5 to 20 switching frequencies on each side of said general switching frequency in frequency spectrum.

In a preferred embodiment of said method, said at least two divided switching frequencies comprise one switching frequency at a general switching frequency.

Furthermore, it is brought forward a new converter arrangement with noise reduction, said converter arrangement comprising an at least one converter, an at least one choke arrangement and an energy supply and/or an energy storage, wherein said at least one converter is arranged: for determining a general switching frequency; and for generating at least two divided switching frequencies, said at least two divided switching frequencies comprising frequencies on both sides of said general switching frequency in frequency spectrum, and wherein said at least one converter is arranged to apply said generated at least two divided switching frequencies as switching frequencies used in said converter arrangement.

In a preferred embodiment of said converter arrangement, said at least one converter is arranged for defining frequency division data, said frequency division data comprising parameters and/or values defining a desired frequency pattern, and wherein said at least one converter is arranged for utilizing said defined frequency division data in generating said at least two divided switching frequencies.

In a preferred embodiment of said converter arrangement, said at least one converter is arranged for generating random numbers by a suitable random function for defining random elements for a desired frequency pattern, and for utilizing said generated random numbers in generating said at least two divided switching frequencies.

In a preferred embodiment of said converter arrangement, said at least one converter is arranged for defining frequency division data, said frequency division data comprising parameters and/or values defining a desired frequency pattern, for generating random numbers by a suitable random function for defining random elements for said desired frequency pattern, and for utilizing said defined frequency division data and said generated random numbers in generating said at least two divided switching frequencies.

In a preferred embodiment of said converter arrangement, said at least two divided switching frequencies comprise one switching frequency at a general switching frequency.

In a preferred embodiment of said converter arrangement, said at least one choke arrangement is/are integrated in said at least one converter.

In a preferred embodiment of said converter arrangement, said converter arrangement comprises an energy storage.

Furthermore, it is brought forward a new converter of a converter arrangement with noise reduction, said converter arrangement comprising an at least one converter, an at least one choke arrangement and an energy supply and/or an energy storage, wherein said at least one converter is arranged: for determining a general switching frequency; and for generating at least two divided switching frequencies, said at least two divided switching frequencies comprising frequencies on both sides of said general switching frequency in frequency spectrum, and wherein said at least one converter is arranged to apply said generated at least two divided switching frequencies as switching frequencies used in said converter arrangement.

### BRIEF DESCRIPTION OF THE DRAWINGS

In the following, the present invention will be described in more detail by way of example and with reference to the attached drawings, in which:
Figure 1 illustrates an embodiment of a converter arrangement according to the present invention.
Figure 2 illustrates another embodiment of a converter arrangement according to the present invention.
Figure 3 illustrates a third embodiment of a converter arrangement according to the present invention.
Figure 4 illustrates a fourth embodiment of a converter arrangement according to the present invention.
Figure 5 illustrates a frequency spectrum diagram showing general switching current components of an embodiment of a solution for reducing noise in a converter arrangement according to the present invention.
Figure 6 illustrates a flow diagram of an embodiment of a method for reducing noise in a converter arrangement according to the present invention.
Figure 7 illustrates a flow diagram of another embodiment of a method for reducing noise in a converter arrangement according to the present invention.
Figure 8 illustrates a frequency spectrum diagram showing divided switching frequencies of one embodiment of a solution for reducing noise in a converter arrangement according to the present invention.
Figure 9 illustrates a frequency spectrum diagram showing divided switching frequencies of another embodiment of a solution for reducing noise in a converter arrangement according to the present invention.
Figure 10 illustrates a frequency spectrum diagram showing divided switching frequencies of a third embodiment of a solution for reducing noise in a converter arrangement according to the present invention.
Figure 11 illustrates a flow diagram of a third embodiment of a method for reducing noise in a converter arrangement according to the present invention.
Figure 12 illustrates a flow diagram of a fourth embodiment of a method for reducing noise in a converter arrangement according to the present invention.

The foregoing aspects, features and advantages of the invention will be apparent from the drawings and the detailed description related thereto.

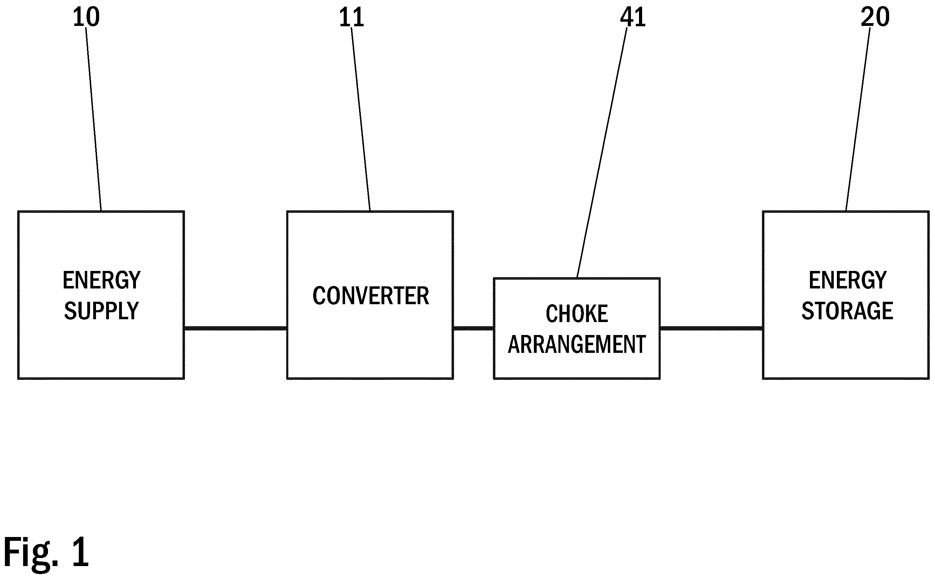

In the following, the invention will be described in greater detail by means of preferred embodiments with reference to the accompanying drawings of Figures 1 to 12.

### DETAILED DESCRIPTION

The arrangement for reducing noise in a converter arrangement according to one embodiment of the present invention comprises an at least one converter, an at least one choke arrangement and an energy supply and/or an energy storage, wherein said at least one converter is arranged: for determining a general switching frequency; and for generating at least two divided switching frequencies, said at least two divided switching frequencies comprising frequencies on both sides of said general switching frequency in frequency spectrum, and wherein said at least one converter is arranged to apply said generated at least two divided switching frequencies as switching frequencies used in said converter arrangement.

Figure 1 illustrates an embodiment of a converter arrangement according to the present invention. The presented embodiment comprises an energy supply 10, a converter 11, a choke arrangement 41 and an energy storage 20 connected via a common connection. Said energy supply 10 may be a generator 10 of a solar power plant, a generator 10 of a wind power plant, or a generator 10 of industrial, marine, or of another power generation application, an electric power network 10 or any other application 10 providing energy supply.

In the presented embodiment of a converter arrangement said converter 11 transfers the energy from said energy supply 10 via said common connection into said energy storage 20. Said converter 11 may be a DC/DC converter 11. In the presented embodiment said choke arrangement 41 is used for slowing the rate of change of current, i.e., to filtering rapid changes in current. In the presented embodiment said choke arrangement 41 is arranged as a separate unit between said converter 11 and said energy storage 20. In an alternative embodiment said choke arrangement 41 is integrated in said converter 11.

In the presented embodiment of an arrangement for reducing noise in a converter arrangement according to the present invention, the converter 11 is arranged for determining a general switching frequency; and for generating at least two divided switching frequencies, said at least two divided switching frequencies being on both sides of said general switching frequency in frequency spectrum. The converter 11 is then arranged to apply said generated at least two divided switching frequencies as switching frequencies used in said converter arrangement.

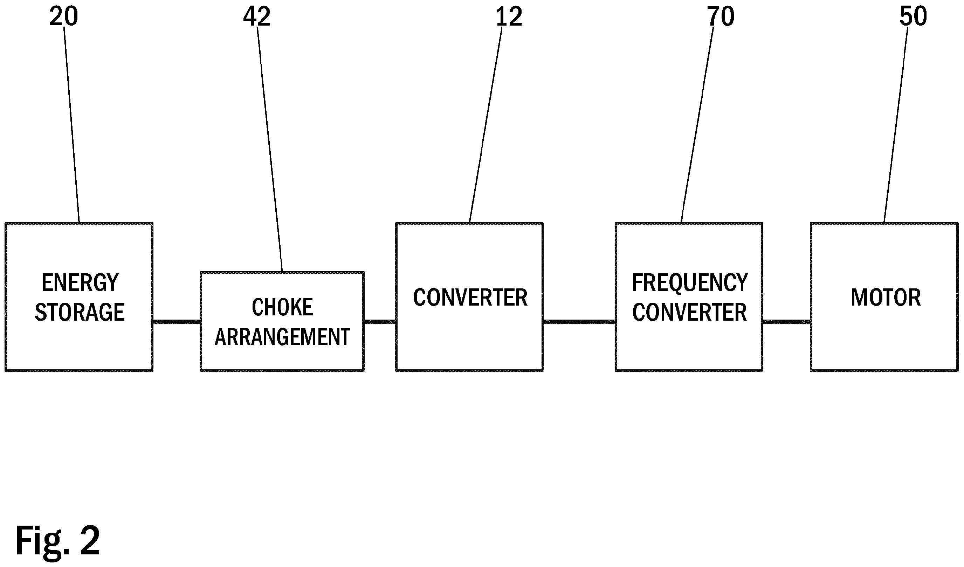

Figure 2 illustrates another embodiment of a converter arrangement according to the present invention. The presented embodiment comprises an energy storage 20, a converter 12, a choke arrangement 42, an electric machine 50 and a frequency converter 70 connected via a common connection. In the presented embodiment said electric machine 50 is a motor 50. Said motor 50 may be a motor 50 of a bus, a motor 50 of a mining machine, or a motor 50 of transportation, industrial, marine, or of another electrically powered motor application.

In the presented another embodiment of a converter arrangement said converter 12 transfers energy from said energy storage 20 via said common connection and utilizes the transferred energy for driving said motor 50. Said converter 12 may be a DC/DC converter 12. Said converter arrangement may also be arranged to transfer energy back from said motor 50 to said energy storage 20, e.g., in regenerative braking.

In the presented another embodiment said choke arrangement 42 is used for slowing the rate of change of current, i.e., to filtering rapid changes in current. In the presented another embodiment said choke arrangement 42 is arranged as a separate unit between said energy storage 20 and said converter 12. In an alternative embodiment said choke arrangement 42 is integrated in said converter 12.

In the presented another embodiment of an arrangement for reducing noise in a converter arrangement according to the present invention, the converter 12 is arranged for determining a general switching frequency; and for generating at least two divided switching frequencies, said at least two divided switching frequencies being on both sides of said general switching frequency in frequency spectrum. The converter 12 is then arranged to apply said generated at least two divided switching frequencies as switching frequencies used in said converter arrangement.

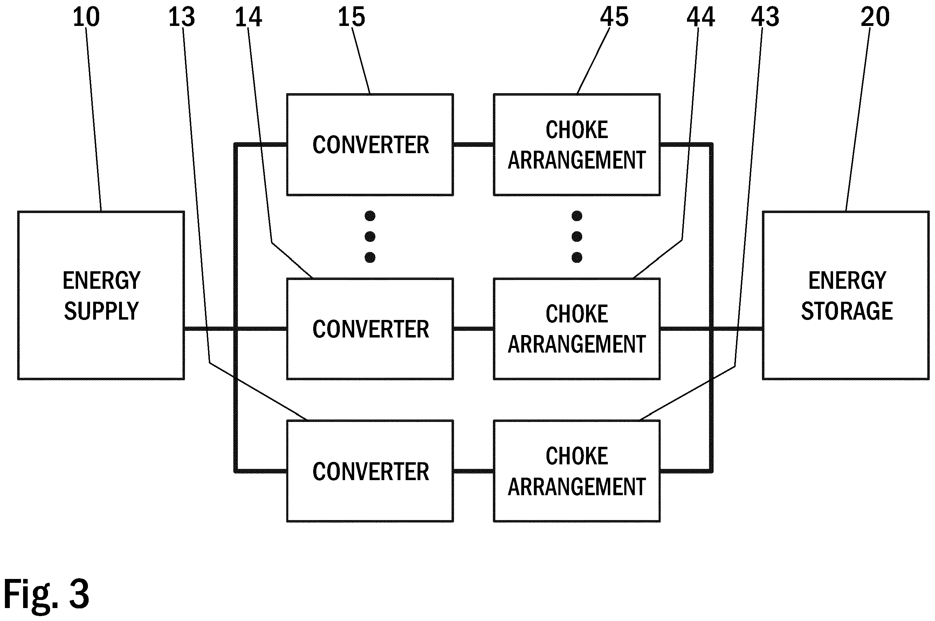

Figure 3 illustrates a third embodiment of a converter arrangement according to the present invention. The presented third embodiment comprises an energy supply 10, several converters 13-15, several choke arrangements 43-45 and an energy storage 20. Said energy supply 10 may be a generator 10 of a solar power plant, a generator 10 of a wind power plant, or a generator 10 of industrial, marine or of another power generation application, an electric power network 10 or any other application 10 providing energy supply. In the presented third embodiment said several converters 13-15 and said several choke arrangements 43-45 are connected to said energy supply 10 and to said energy storage 20 as pairs 13 & 43, 14 & 44, 15 & 45, each of said pairs 13 & 43, 14 & 44, 15 & 45, comprising one converter 13-15 of said several converters 13-15 and one choke arrangement 43-45 of said several choke arrangements 43-45. In the presented third embodiment there are shown three pairs of converters and choke arrangements 13 & 43, 14 & 44, 15 & 45. In an alternative embodiment there can be two pairs of converters and choke arrangements. In another alternative embodiment there can be four or more pairs of converters and choke arrangements as depicted by three dots in Figure 3.

In the presented third embodiment of a converter arrangement said several converters 13-15 transfer the energy from said energy supply 10 into said energy storage 20. Said converters 13-15 may be DC/DC converters 13-15. In the presented third embodiment said several choke arrangements 43-45 are used for slowing the rate of change of current, i.e., to filtering rapid changes in current. In the presented embodiment each choke arrangement 43-45 of said several choke arrangements 43-45 is arranged as a separate unit between one converter 13-15 of said several converters 13-15 and said energy storage 20. In an alternative embodiment each choke arrangement 43-45 of said several choke arrangements 43-45 is integrated in one converter 13-15 of said several converters.

In the presented third embodiment of an arrangement for reducing noise in a converter arrangement according to the present invention, said several converters 13-15 are arranged for determining a general switching frequency; and for generating at least two divided switching frequencies, said at least two divided switching frequencies being on both sides of said general switching frequency in frequency spectrum. Said several converters 13-15 are then arranged to apply said generated at least two divided switching frequencies as switching frequencies used in said converter arrangement.

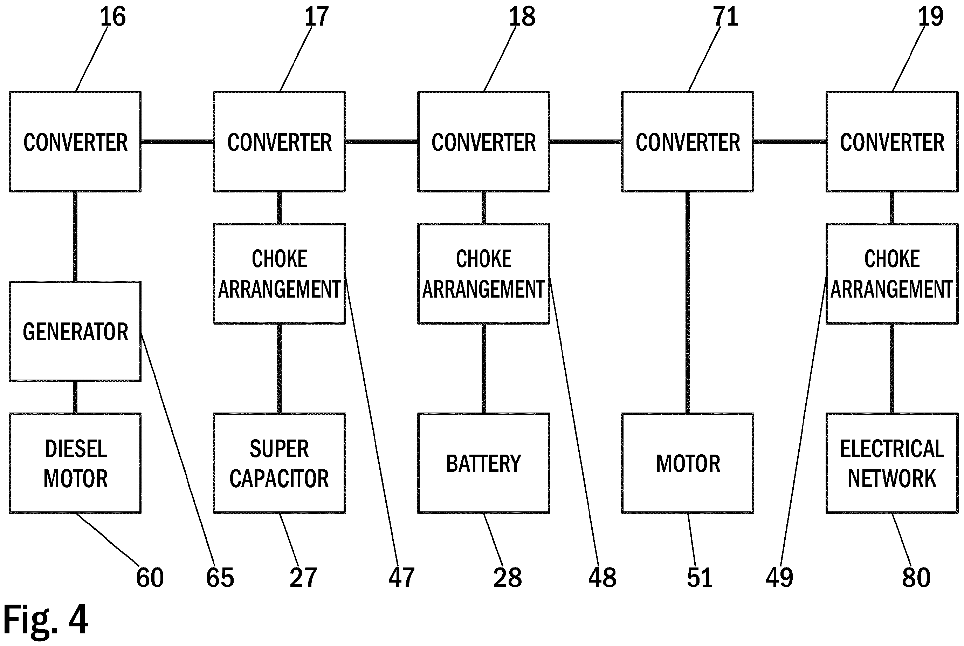

Figure 4 illustrates a fourth embodiment of a converter arrangement according to the present invention. The presented fourth embodiment comprises a diesel motor 60, a generator 65 and a first converter 16 connected in series, said diesel motor 60 and said generator 65 providing an energy supply. Said first converter 16 may be an AC/DC converter 16.

The presented fourth embodiment also comprises a second converter 17 connected to said first converter 16, and a first choke arrangement 47 and a super capacitor 27 connected in series with said second converter 17, said super capacitor 27 acting as an energy storage and/or as an energy supply. Said first choke arrangement 47 may be a three-phase choke arrangement 47.

The presented fourth embodiment also comprises a third converter 18 connected to said second converter 17, and a second choke arrangement 48 and a battery 28 connected in series with said third converter 18, said battery 28 acting as an energy storage and/or as an energy supply. Said second choke arrangement 48 may be a three-phase choke arrangement 48.

The presented fourth embodiment also comprises a fourth converter 71 connected to said third converter 18, and a motor 51 connected in series with said fourth converter 71.

The presented fourth embodiment also comprises a fifth converter 19 connected to said fourth converter 71, and a third choke arrangement 49 and an electrical network 80 connected in series with said fifth converter 19, said electrical network 80 acting as an energy storage and/or as an energy supply. Said electrical network 80 may be an electrical grid 80. Said third choke arrangement 49 may be an LCL choke arrangement 49 (LCL, inductor-capacitor-inductor).

In the presented embodiment said first choke arrangement 47, said second choke arrangement 48 and said third choke arrangement 49 are used for slowing the rate of change of current, i.e., to filtering rapid changes in current. In the presented embodiment said first choke arrangement 47, said second choke arrangement 48 and said third choke arrangement 49 are each arranged as a separate unit. In an alternative embodiment said first choke arrangement 47 is integrated in said second converter 17, said second choke arrangement 48 is integrated in said third converter 18 and/or said third choke arrangement 49 is integrated in said fifth converter 19.

In the presented embodiment of an arrangement for reducing noise in a converter arrangement according to the present invention, said second converter 17, said third converter 18 and said fifth converter 19 are each arranged for determining a general switching frequency; and for generating at least two divided switching frequencies, said at least two divided switching frequencies being on both sides of said general switching frequency in frequency spectrum. Said second converter 17, said third converter 18 and said fifth converter 19 are then each arranged to apply said generated at least two divided switching frequencies as switching frequencies used in said converter arrangement.

In an alternative embodiment of an arrangement for reducing noise in a converter arrangement according to the present invention, the converters 11-15, 17-19 are further arranged for defining frequency division data, said frequency division data comprising parameters and/or values defining a desired frequency pattern. Furthermore, in said alternative embodiment said converters 11-15, 17-19 are arranged for utilizing said defined frequency division data in generating said at least two divided switching frequencies.

In a further alternative embodiment of an arrangement for reducing noise in a converter arrangement according to the present invention, the converters 11-15, 17-19 are further arranged for generating random numbers by a suitable random function for defining random elements for a desired frequency pattern. Furthermore, in said further alternative embodiment said converters 11-15, 17-19 are arranged for utilizing said generated random numbers in generating said at least two divided switching frequencies on both sides of the general switching frequency in frequency spectrum.

In another further alternative embodiment of an arrangement for reducing noise in a converter arrangement according to the present invention, the converters 11-15, 17-19 are further arranged for defining frequency division data, said frequency division data comprising parameters and/or values defining a desired frequency pattern, and for generating random numbers by a suitable random function for defining random elements for said desired frequency pattern. Furthermore, in said another further alternative embodiment said converters 11-15, 17-19 are arranged for utilizing said defined frequency division data and said generated random numbers in generating said at least two divided switching frequencies.

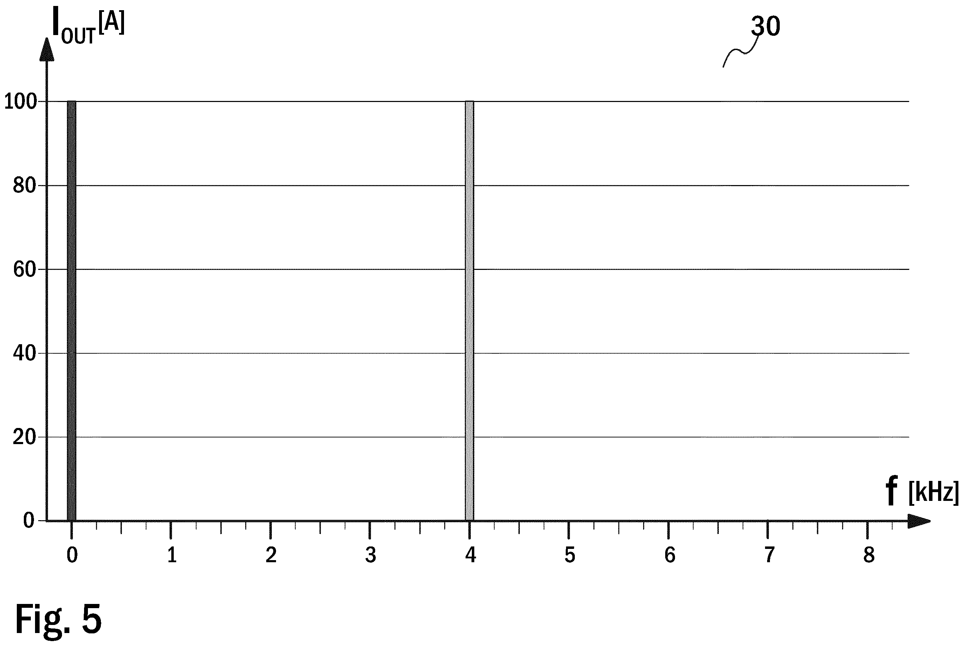

Figure 5 illustrates a frequency spectrum diagram showing general switching current components of an embodiment of a solution for reducing noise in a converter arrangement according to the present invention. In the presented embodiment of an arrangement for reducing noise in a converter arrangement according to the present invention, the converter 11-15, 17-19 is arranged for determining a general switching frequency 30 for said converter arrangement.

In Figure 5 the vertical axis shows the magnitude of the switching current components, and the horizontal axis indicates the frequency of each of the switching current components. As illustrated in Figure 5, general switching current components 30 are shown as having only a 100A (100 Amperes) direct current component at 0 kHz and only one switching current component at a general switching frequency 4kHz (4000 Hertz) in the frequency spectrum.

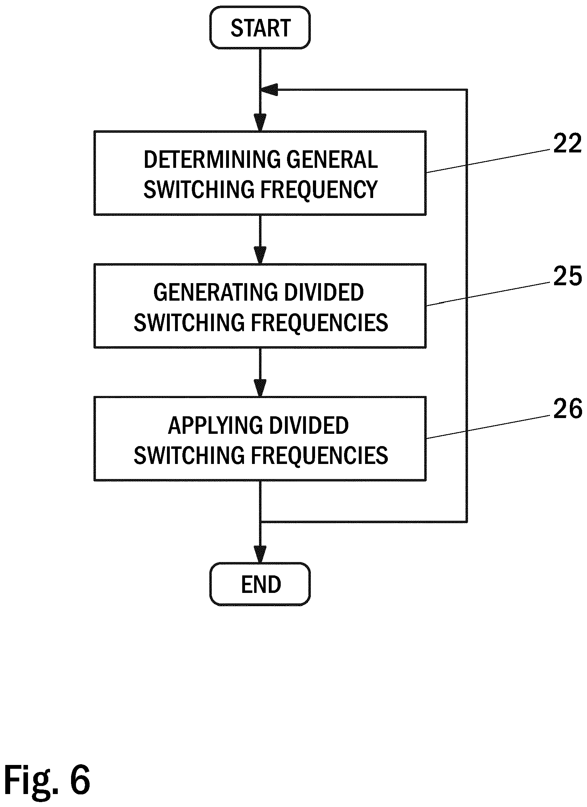

Figure 6 illustrates a flow diagram of an embodiment of a method for reducing noise in a converter arrangement according to the present invention. In the method according to the present embodiment, a general switching frequency for a converter 11-15, 17-19 of said converter arrangement is first determined 22.

Thereafter, in the presented embodiment, at least two divided switching frequencies are generated 25, said at least two divided switching frequencies being on both sides of said general switching frequency in frequency spectrum.

In the presented embodiment, as the next step, said generated at least two divided switching frequencies are applied 26 by said converter 11-15, 17-19 as switching frequencies used in said converter arrangement.

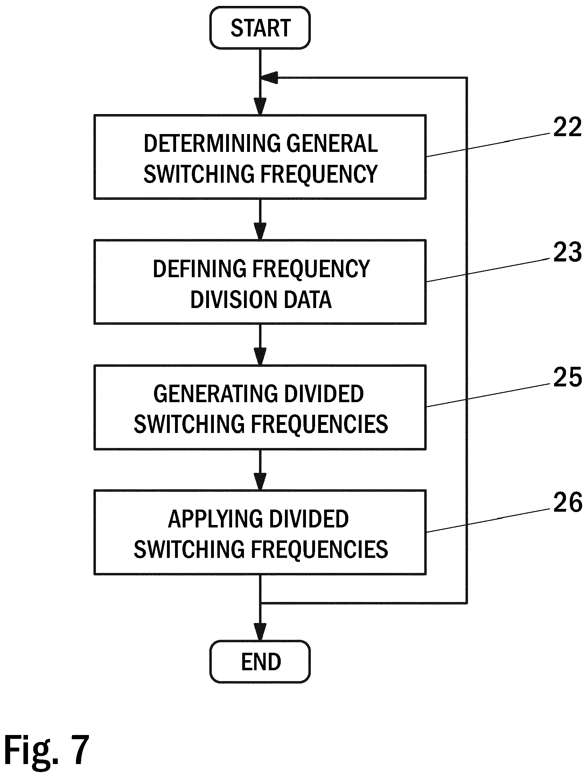

Figure 7 illustrates a flow diagram of another embodiment of a method for reducing noise in a converter arrangement according to the present invention. In the method according to the present another embodiment, a general switching frequency for a converter 11-15, 17-19 of said converter arrangement is first determined 22. Thereafter, in the presented another embodiment, frequency division data is defined 23, said frequency division data comprising parameters and/or values defining the desired frequency pattern. Said frequency division data may be defined 23 utilizing operational data and/or environmental data, said operational data comprising one more operational parameter(s) and said environmental data comprising one more environmental parameter(s). Said operational parameters may include parameters defining the operation of converter arrangement according to the present invention, i.e., the duration of operation, noisiness of the operation, etc. Said environmental parameters may include parameters defining the environment of converter arrangement according to the present invention, i.e., temperature, pressure, humidity, presence of people, environment type, installation type, surroundings, etc.

In the presented another embodiment, as the next step, at least two divided switching frequencies are generated 25 with the help of said defined frequency division data, said at least two divided switching frequencies being on both sides of said general switching frequency in frequency spectrum. Thereafter, in the presented another embodiment, said generated at least two divided switching frequencies are applied 26 by said converter 11-15, 17-19 as switching frequencies used in said converter arrangement.

In the present invention said at least two divided switching frequencies can be generated on both sides of said general switching frequency in frequency spectrum using any kind of control modes where the switching frequency spectrum is intentionally applied to both sides of the actual switching frequency, i.e. said general switching frequency.

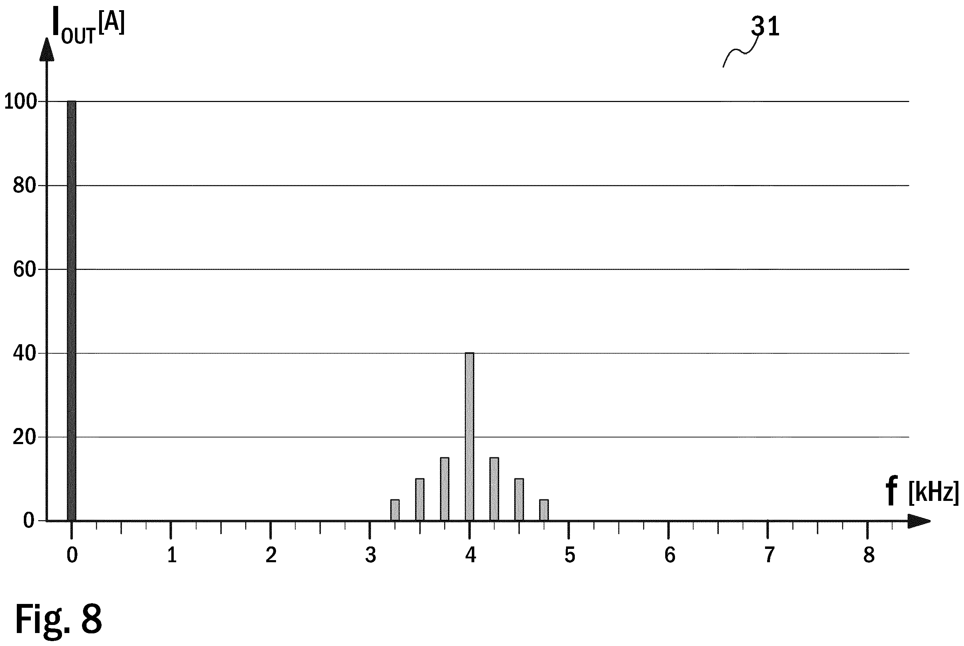

Figure 8 illustrates a frequency spectrum diagram showing divided switching current components of one embodiment of a solution for reducing noise in a converter arrangement according to the present invention. In the presented embodiment, a converter 11-15, 17-19 of said converter arrangement is arranged for determining a general switching frequency for said converter arrangement; and for generating at least two divided switching frequencies, said at least two divided switching frequencies being on both sides of said general switching frequency in frequency spectrum. The converter 11-15, 17-19 is then arranged to apply said generated at least two divided switching frequencies as switching frequencies used for said converter arrangement.

In Figure 8 the vertical axis shows the magnitude of the switching current components, and the horizontal axis indicates the frequency of each of the switching current components. As illustrated in Figure 8, said divided switching current components 31 are shown as having one 100A (100 Amperes) direct current component at 0 kHz and several divided switching current components in the frequency spectrum. In the presented embodiment, said several divided switching current components comprise one 40A primary switching current component at a general switching frequency 4kHz (4000 Hertz) and at least two divided switching current components on both sides of said general switching frequency 4kHz in frequency spectrum. In the presented embodiment, said at least two divided switching current components comprise three 5-15A divided switching current components on each side of said general switching frequency 4kHz in frequency spectrum.

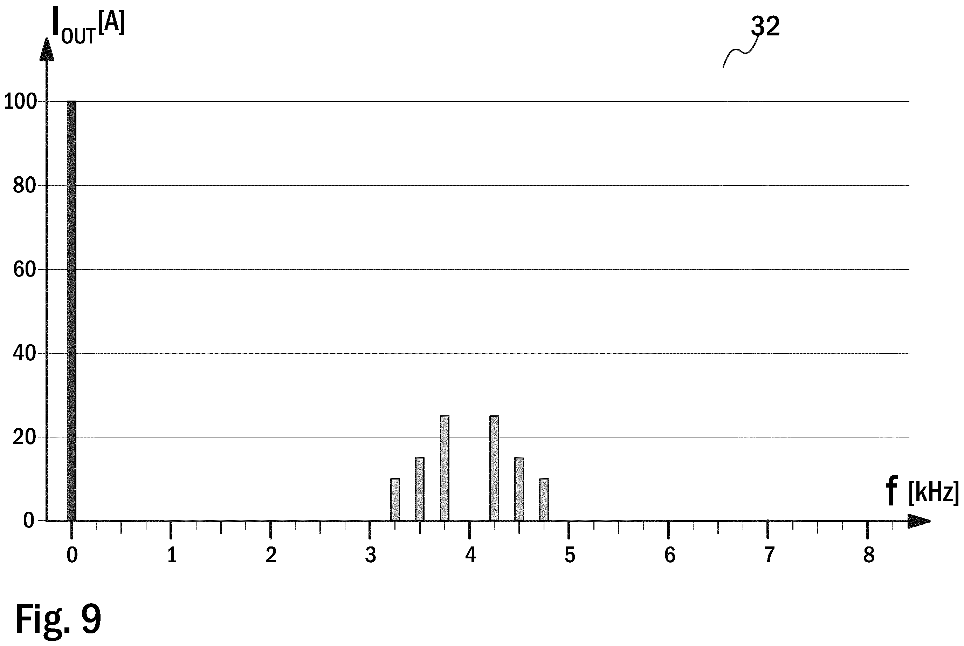

Figure 9 illustrates a frequency spectrum diagram showing divided switching current components of another embodiment of a solution for reducing noise in a converter arrangement according to the present invention. In the presented another embodiment, a converter 11-15, 17-19 of said converter arrangement is arranged for determining a general switching frequency for said converter arrangement; and for generating at least two divided switching frequencies, said at least two divided switching frequencies being on both sides of said general switching frequency in frequency spectrum. The converter 11-15, 17-19 is then arranged to apply said generated at least two divided switching frequencies as switching frequencies used for said converter arrangement.

In Figure 9 the vertical axis shows the magnitude of the switching current components, and the horizontal axis indicates the frequency of each of the switching current components. As illustrated in Figure 8, said divided switching current components 32 are shown as having one 100A (100 Amperes) direct current component at 0 kHz and several divided switching current components in the frequency spectrum. In the presented another embodiment, said several divided switching current components comprise at least two divided switching current components on both sides of a general switching frequency 4kHz (4000 Hertz) in frequency spectrum.

In an embodiment of the solution for reducing noise in a converter arrangement according to the present invention, said at least two divided switching current components may comprise 2 to 4 switching current components on each side of said general switching frequency in frequency spectrum. In the presented another embodiment, said at least two divided switching current components comprise three 10A-25A divided switching current components on each side of said general switching frequency 4kHz in frequency spectrum.

In an embodiment of the solution for reducing noise in a converter arrangement according to the present invention, said at least two divided switching current components may comprise a primary switching current component at a general switching frequency. In another embodiment of the solution for reducing noise in a converter arrangement according to the present invention, said at least two divided switching current components may not comprise a switching current component at a general switching frequency. In the presented embodiment, said at least two divided switching current components do not comprise a switching current component at a general switching frequency.

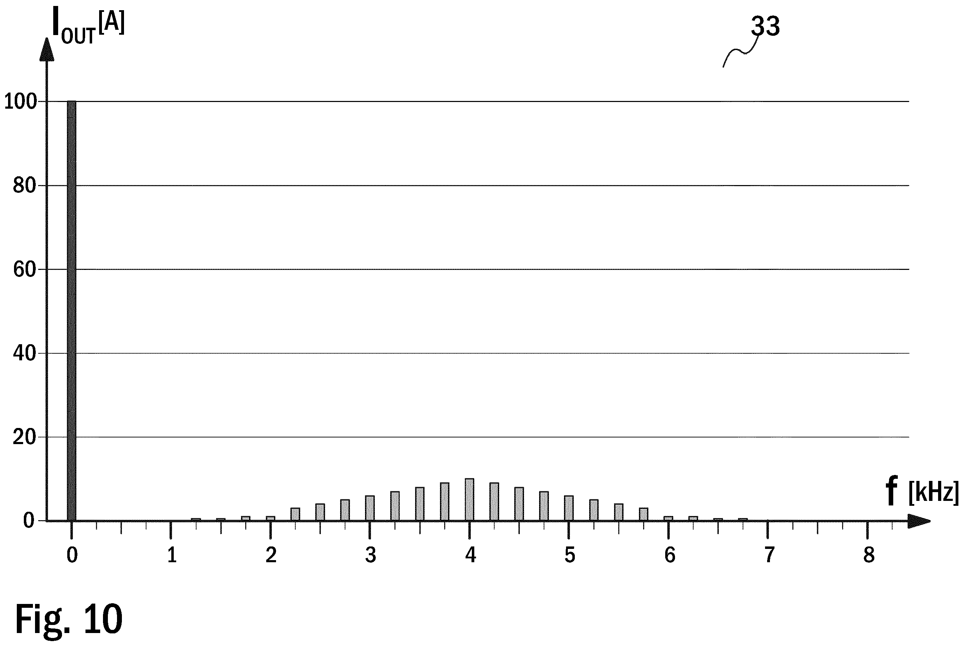

Figure 10 illustrates a frequency spectrum diagram showing divided switching current components of a third embodiment of a solution for reducing noise in a converter arrangement according to the present invention. In the presented third embodiment, a converter 11-15, 17-19 of said converter arrangement is arranged for determining a general switching frequency for said converter arrangement; and for generating at least two divided switching frequencies, said at least two divided switching frequencies being on both sides of said general switching frequency in frequency spectrum. The converter 11-15, 17-19 is then arranged to apply said generated at least two divided switching frequencies as switching frequencies used for said converter arrangement.

In Figure 10 the vertical axis shows the magnitude of the switching current components, and the horizontal axis indicates the frequency of each of the switching current components. As illustrated in Figure 9, said divided switching current components 33 are shown as having one 100A (100 Amperes) direct current component at 0 kHz and several divided switching current components in the frequency spectrum. In the presented embodiment, said several divided switching current components comprise one 10A primary switching current component at a general switching frequency 4kHz (4000 Hertz) and at least two divided switching current components on both sides of said general switching frequency 4kHz in frequency spectrum.

In an embodiment of the solution for reducing noise in a converter arrangement according to the present invention, said at least two divided switching current components may comprise 5 to 20 switching current components on each side of said general switching frequency in frequency spectrum. In another embodiment of the solution for reducing noise in a converter arrangement according to the present invention, said at least two divided switching current components may comprise over 20 switching current components on each side of said general switching frequency in frequency spectrum. In the presented embodiment, said at least two divided switching current components comprise eleven 0,5-9A divided switching current components on each side of said general switching frequency 4kHz in frequency spectrum.

In an embodiment of the solution for reducing noise in a converter arrangement according to the present invention, said at least two divided switching current components may comprise a primary switching current component at a general switching frequency. In another embodiment of the solution for reducing noise in a converter arrangement according to the present invention, said at least two divided switching current components may not comprise a switching current component at a general switching frequency.

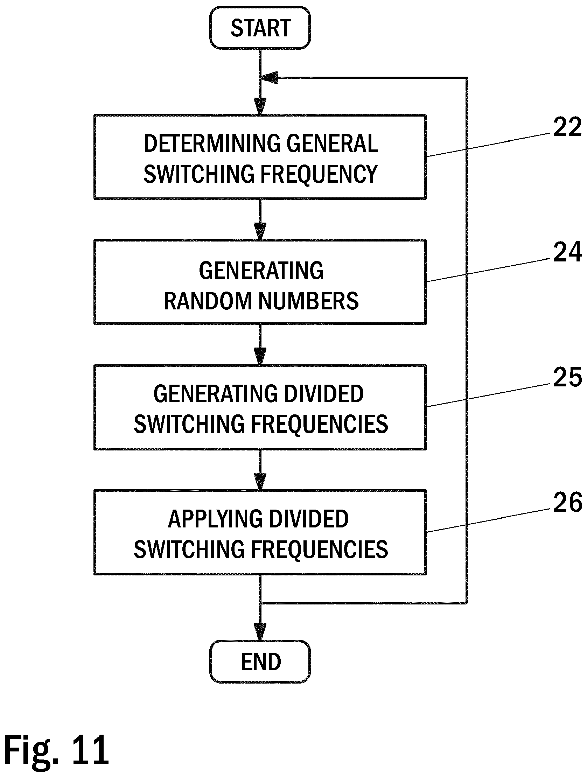

Figure 11 illustrates a flow diagram of a third embodiment of a method for reducing noise in a converter arrangement according to the present invention. In the method according to the present third embodiment, a general switching frequency for a converter 11-15, 17-19 of said converter arrangement is first determined 22. Thereafter, in the presented third embodiment, random numbers are generated 24 by a suitable random function for defining random elements for a desired frequency pattern.

In the presented third embodiment, as the next step, at least two divided switching frequencies are generated 25 with the help of said defined frequency division data, said at least two divided switching frequencies being on both sides of said general switching frequency in frequency spectrum. Thereafter, in the presented third embodiment, said generated at least two divided switching frequencies are applied 26 by said converter 11-15, 17-19 as switching frequencies used for said converter arrangement.

In the present invention said at least two divided switching frequencies can be generated on both sides of said general switching frequency in frequency spectrum using any kind of a suitable random function or with tabulated values, whereby a desired spectrum pattern is achieved. In this case, the pulse ratio remains constant, and the generation of divided switching frequencies does not affect the operation of the traditional pulse width control.

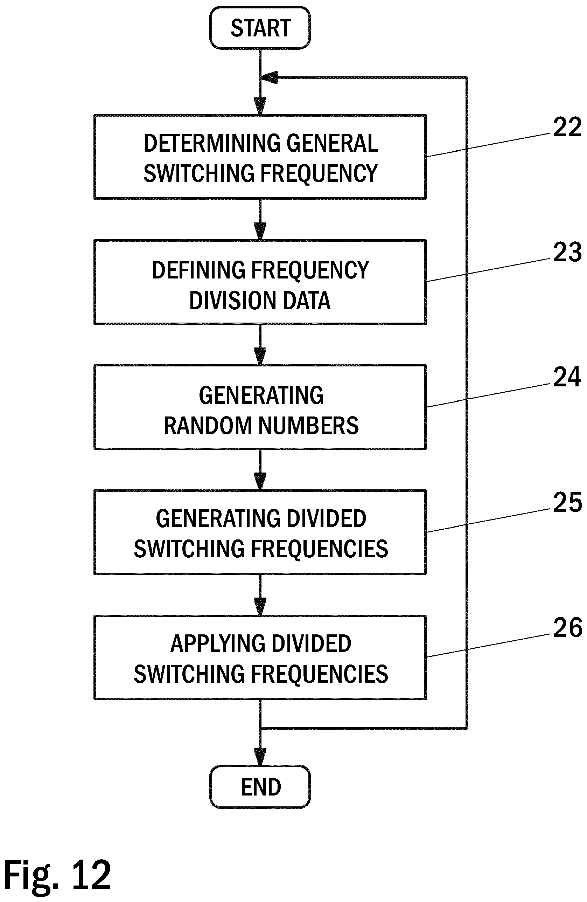

Figure 12 illustrates a flow diagram of a fourth embodiment of a method for reducing noise in a converter arrangement according to the present invention. In the method according to the present fourth embodiment, a general switching frequency for a converter 11-15, 17-19 of said converter arrangement is first determined 22. Thereafter, in the presented fourth embodiment, frequency division data is defined 23, said frequency division data comprising parameters and/or values defining the desired frequency pattern. Said frequency division data may be defined 23 utilizing operational data and/or environmental data, said operational data comprising one more operational parameter(s) and said environmental data comprising one more environmental parameter(s). Said operational parameters may include parameters defining the operation of converter arrangement according to the present invention, i.e., the duration of operation, noisiness of the operation, etc. Said environmental parameters may include parameters defining the environment of converter arrangement according to the present invention, i.e., temperature, pressure, humidity, presence of people, environment type, installation type, surroundings, etc.

Also Thereafter, in the presented fourth embodiment, random numbers are generated 24 by a suitable random function for defining random elements for the desired frequency pattern.

In the presented fourth embodiment, as the next step, at least two divided switching frequencies are generated 25 with the help of said defined frequency division data, said at least two divided switching frequencies being on both sides of said general switching frequency in frequency spectrum. Thereafter, in the presented fourth embodiment, said generated at least two divided switching frequencies are applied 26 by said converter 11-15, 17-19 as switching frequencies used for said converter arrangement.

With the help of the method and an arrangement for reducing noise in a converter arrangement according to the present invention the noise level of the converter arrangement can be substantially reduced. The solution according to the present invention reduces the noise level by lowering of individual frequency peaks by transferring energy to the surrounding frequencies. This brings about a reduced decibel level of sound, an increased sound comfort, and a reduced annoyance of sound to the human ear.

The solution according to the present invention provides an effective and elegant solution for reducing the noise level of the converter arrangement. This is especially true for converter arrangements used with high-power energy storage. With the help of the present invention the noise level of the output chokes of the converters can be substantially reduced. With the help of the present invention the sound of the chokes is more even, more pleasant and smoother.

Furthermore, the method and an arrangement for reducing noise in a converter arrangement according to the present invention provides a straightforward and inexpensive solution for reducing the noise level of the converter arrangement.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims and their equivalents.

## Claims

1. A method for reducing noise in a converter arrangement, said converter arrangement comprising an at least one converter (11-15, 17-19), an at least one choke arrangement (41-45, 47-49) and an energy supply (10, 27, 28, 60. 65, 80) and/or an energy storage (20, 27, 28, 80), in which method:
- a general switching frequency for said at least one converter (11-15, 17-19) is determined (22);
- at least two divided switching frequencies are generated (25), said at least two divided switching frequencies comprising frequencies on both sides of said general switching frequency in frequency spectrum; and
- said generated at least two divided switching frequencies are applied (26) by said at least one converter (11-15, 17-19) as switching frequencies used in said converter arrangement.

2. A method according to claim 1, in which method:
- frequency division data is defined (23), said frequency division data comprising parameters and/or values defining a desired frequency pattern; and
- said at least two divided switching frequencies are generated (25) with the help of said defined frequency division data.

3. A method according to claim 1, in which method:
- random numbers are generated (24) by a suitable random function for defining random elements for a desired frequency pattern; and
- said at least two divided switching frequencies are generated (25) with the help of said generated random numbers.

4. A method according to claim 1, in which method:
- frequency division data is defined (23), said frequency division data comprising parameters and/or values defining a desired frequency pattern;
- random numbers are generated (24) by a suitable random function for defining random elements for said desired frequency pattern; and
- said at least two divided switching frequencies are generated (25) with the help of said defined frequency division data and said generated random numbers.

5. A method according to any of the claims 1-4, in which method said at least two divided switching frequencies comprise 2 to 4 switching frequencies on each side of said general switching frequency in frequency spectrum.

6. A method according to any of the claims 1-4, in which method said at least two divided switching frequencies comprise 5 to 20 switching frequencies on each side of said general switching frequency in frequency spectrum.

7. A method according to any of the claims 1-6, in which method said at least two divided switching frequencies comprise one switching frequency at a general switching frequency.

8. A converter arrangement with noise reduction, said converter arrangement comprising an at least one converter (11-15, 17-19), an at least one choke arrangement (41-45, 47-49) and an energy supply (10, 27, 28, 60. 65, 80) and/or an energy storage (20, 27, 28, 80),
- wherein said at least one converter (11-15, 17-19) is arranged:
- for determining a general switching frequency; and
- for generating at least two divided switching frequencies, said at least two divided switching frequencies comprising frequencies on both sides of said general switching frequency in frequency spectrum, and
- wherein said at least one converter (11-15, 17-19) is arranged to apply said generated at least two divided switching frequencies as switching frequencies used in said converter arrangement.

9. A converter arrangement according to claim 8, wherein said at least one converter (11-15, 17-19) is arranged for defining frequency division data, said frequency division data comprising parameters and/or values defining a desired frequency pattern, and wherein said at least one converter (11-15, 17-19) is arranged for utilizing said defined frequency division data in generating said at least two divided switching frequencies.

10. A converter arrangement according to claim 8, wherein said at least one converter (11-15, 17-19) is arranged for generating random numbers by a suitable random function for defining random elements for a desired frequency pattern, and for utilizing said generated random numbers in generating said at least two divided switching frequencies.

11. A converter arrangement according to claim 8, wherein said at least one converter (11-15, 17-19) is arranged for defining frequency division data, said frequency division data comprising parameters and/or values defining a desired frequency pattern, for generating random numbers by a suitable random function for defining random elements for said desired frequency pattern, and for utilizing said defined frequency division data and said generated random numbers in generating said at least two divided switching frequencies.

12. A converter arrangement according to any of the claims 8-11, wherein said at least two divided switching frequencies comprise one switching frequency at a general switching frequency.

13. A converter arrangement according to any of the claims 8-12, wherein said at least one choke arrangement (41-45, 47-49) is/are integrated in said at least one converter (11-15, 17-19).

14. A converter arrangement according to any of the claims 8-13, wherein said converter arrangement comprises an energy storage (20).

15. A converter (11-15, 17-19) of an arrangement according to any of the claims 8-14.
